(19) Europäisches Patentamt / European Patent Office / Office européen des brevets

(11) **EP 2 556 381 B1**

(12) **EUROPEAN PATENT SPECIFICATION**

(45) Date of publication and mention of the grant of the patent:
**07.05.2014 Bulletin 2014/19**

(21) Application number: **10732489.9**

(22) Date of filing: **05.04.2010**

(51) Int Cl.:
*G01D 5/243* (2006.01)   *G01P 3/48* (2006.01)

(86) International application number:
**PCT/TR2010/000070**

(87) International publication number:
**WO 2011/126462 (13.10.2011 Gazette 2011/41)**

(54) **SPEED AND ROTOR POSITION ESTIMATION OF ELECTRICAL MACHINES USING ROTOR SLOT HARMONICS OR HIGHER ORDER ROTOR SLOT HARMONICS**

DREHZAHL- UND ROTORPOSITIONSKALKULATION BEI ELEKTROMASCHINEN MIT LÄUFERNUT-OBERSCHWINGUNGEN ODER LÄUFERNUT-OBERSCHWINGUNGEN HÖHERER ORDNUNG

ESTIMATION DE LA VITESSE ET DE LA POSITION DU ROTOR DE MACHINES ÉLECTRIQUES EN UTILISANT DES HARMONIQUES DES RAINURES DE ROTOR OU DES HARMONIQUES D'ORDRE SUPÉRIEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.02.2013 Bulletin 2013/07**

(73) Proprietors:
• **Ertan, Hulusi Bulent**
  **06531 Ankara (TR)**
• **Keysan, Ozan**
  **06531 Ankara (TR)**

(72) Inventors:
• **Ertan, Hulusi Bulent**
  **06531 Ankara (TR)**
• **Keysan, Ozan**
  **06531 Ankara (TR)**

(74) Representative: **Berkkam, Ayfer**
  **AZe Marka Patent Ltd.Co.**
  **Becker-Gundahl-Strasse 49**
  **81479 Munich (DE)**

(56) References cited:
WO-A1-98/15839        DE-A1-102006 008 048
JP-A- 2007 259 559     US-A1- 2003 065 634

• ERTAN H B ET AL: "External search coil as a means of measuring rotor speed of an induction motor", ADVANCED ELECTROMECHANICAL MOTION SYSTEMS&ELECTRIC DRIVES JOINT SYMPOSIUM, 2009. ELECTROMOTION 2009. 8TH INTERNATIONAL SYMPOSIUM ON, IEEE, PISCATAWAY, NJ, USA, 1 July 2009 (2009-07-01), pages 1-6, XP031530773, ISBN: 978-1-4244-5150-0
• KEVIN D HURST ET AL: "Sensorless Speed Measurement Using Current Harmonic Spectral Estimation in Induction Machine Drives", IEEE TRANSACTIONS ON POWER ELECTRONICS, IEEE SERVICE CENTER, PISCATAWAY, NJ, US, vol. 11, no. 1, 1 January 1996 (1996-01-01), XP011042920, ISSN: 0885-8993

## Description

### Related Field of the Invention:

The present invention is a method and a system developed for speed and rotor position estimation of electrical machines that comprises rotor speed and position detection by processing higher order rotor slot harmonics in real time that does not need any spectral analysis technique or sensor in some variations of the application.

### Background of the Invention (Prior Art):

The speed and instantaneous rotor position determination is essential in electrical machine control. The speed and position is typically measured by using speed sensors. However, a speed sensor introduces extra cost on the system and reduces the system reliability. Thus, measuring rotor speed without an extra sensor is essential on induction motor control. In the following rotor position detection without a direct position component (sensorless) voltage, current and flux measurement sensors may be utilized.

One common approach to sensorless rotor speed and position estimation is to employ a field orientation technique which is generally called in the literature as "Vector control". In sensorless vector control, rotor speed is estimated by using voltage or current model of the induction motor. Briefly, rotor flux vector is obtained indirectly by integrating the induced voltage which can be measured by sense coils or phase voltage. However, the accuracy of rotor speed estimation is mainly dependent on the accuracy of integration and usually fails at low speeds.

An alternative way to improve the measurement accuracy at low speed is achieved by injecting a high frequency carrier signal with frequency which is generally higher and independent of the fundamental excitation frequency. For example, Jansen et al., U.S. Pat. Nos. 5,565,752 and 5,585,709 injects a carrier signal to improve rotor speed estimation. On the other hand, these methods either need a modification in the applied pulse-width modulation signals or more generally need an inclusive redesign of the inverter circuitry hardware. Another disadvantage of signal injection has been to generate cogging torques especially at small sized machines.

A different way to measure rotor speed can be achieved by using rotor slot harmonics. The variation of the air gap reluctance due to rotor slot openings modulates the fundamental air-gap flux. This modulation can be observed either from the flux of the machine via a sensing coil, from phase voltages of a current controlled machine or from phase currents of a voltage controlled machines. Ertan H. B., et al. in "External Search Coil as a Means of Measuring Rotor Speed of an Induction Motor" (Electromotion 2009 - EPE Chapter 'Electric Drives' Joint Symposium, 1-3 July 2009, Lille, France), developed an algorithm for identifying the rotor speed using the results of fast Fourier transform analysis. The harmonics caused by rotor slots are generally called as rotor slot harmonics (RSH) in the literature.

RSH are relatively small in magnitude compared to the magnitude of fundamental excitation and its harmonics. The frequency and the magnitude of the RSH are altered by mechanical faults such as broken rotor bars, eccentric rotor or a worn bearing which is described briefly in Negrea M. D., "Electromagnetic flux monitoring for detecting faults in electrical machines", Helsinki University of Technology, Ph.D. thesis, 2006. Thus, RSH are generally utilized for condition monitoring of induction machines for example, in commonly-assigned patents of Kliman et al., U.S. Patent No. 4,761,703 and Casada U.S. Patent No. 5,519,337.

The frequency of the RSH is directly related with the number of rotor slots and the rotor speed. Thus, knowing the number of rotor slots and the frequency of RSH, the rotor speed can be estimated.

It is observed that previous studies always use spectral estimation techniques to determine the frequency of RSH, for example in U.S. Pat No. 5,530,343 and 6,208,132. The spectral estimation technique is mainly based on Fast Fourier Algorithm (FFT). "Sensorless Speed Measurement Using Current Harmonic Spectral Estimation in Induction Machine Drives" (IEEE Transactions on Power Electronics, vol. 11, no. 1, January 1996) by Hurst K. D., et al. is related to a spectral estimation technique which combines multiple current harmonics. This technique aims to determine the rotor speed with high accuracy and lower noise sensitivity than analog filtering of fast Fourier transform. For spectral estimation techniques long sampling periods and complex calculations are inevitable. The sampling and calculation period is typically range of a few seconds to tens of seconds. These estimation periods are suitable for offline condition monitoring methods. But the spectral estimation techniques become useless for instantaneous speed estimation since they take very long time. For cases where speed transients occur, these algorithms cannot estimate the rotor speed due to long data sampling periods.

There are also some other techniques aiming to reduce the sampling periods and calculation time such as U.S. Pat No. 6,789,028, but they are still classified as a variation of spectral analysis method. These approaches obtain the frequency of rotor slot harmonics explicitly then, calculate the rotor speed from this data. Since all mentioned studies use fundamental rotor slot harmonics the spectral analysis is almost inevitable because they exist in a spectrum band where other irrelevant harmonics such as, line harmonics, inverter harmonics or other electromagnetic noise harmonics present. Some patents such as; Jansen et al., U.S. Patent No. 6,388,420 and Takasi et al. DE Patent No. 102006008048 use phase locked loops or adaptive filtering but they still use the fundamental rotor slot harmonics and suffer from the listed problems above. In the PCT application numbered WO 98/15839 A1, the analysis of rotor slot harmonics is performed employing an adaptive filter which is controlled by an algorithm. Said algorithm may be a one such as the recursive maximum likelihood algorithm. The minimum output obtained from said filter is used in determining information such as the speed or position of the rotor. Also, in the document numbered US 2003/065634 A1, a neural network based adaptive filter is developed. Said filter is developed according to motor current measurements, voltage measurements and nameplate information. In order to predict motor speed, said filter is connected to an estimated speed calculator employing current and voltage measurements.

In the application numbered JP 2007 259559 A, rotor groove frequency is used to compute the rotational speed. Said rotor groove frequency is obtained from a signals of a frequency component in a desired frequency band extracted by a Fourier transformation unit, from the voltage signals applied to the stator.

The invention here approaches the problem in a different way. In this case, instantaneous current and voltage data is sampled and higher order rotor slot harmonics are isolated. They exist in higher frequencies than the irrelevant harmonics which in this case they can be eliminated with some basic filtering blocks and the desired harmonics can be extracted. Then, without the need of determining the frequency of rotor slot harmonics explicitly, by only using the extracted signal as an output of an incremental encoder the rotor position and thus rotor speed can be determined.

K.D. Hurst, et. al. in "A Comparison of Spectrum Estimation Techniques or Sensorless Speed Detection in Induction Machines", (IEE Trans. On Industry Applications, vol. 33, No. 4, 1997, pp 898-905") compares different rotor speed estimation techniques, using rotor slot harmonics. But all the techniques listed use fundamental (dominant) rotor slot harmonics and most of them utilize some kind of spectral estimation technique, which increases complexity and cost of the system.

Nandi S, et al. in "Detection of Rotor Slot and Other Eccentricity Related Harmonics in a Three Phase Induction Motor with Different Rotor Cages", IEEE Energy Conversion, Vol.16, No.3, 2001, pp 253-260 introduces some techniques to detect rotor slot harmonics in induction machines. But the proposed method needs a specially designed or modified rotor structure, which is either impossible or very costly for most of the current induction motors and drives. Again, the analysis of these harmonics has been performed by spectral estimation techniques.

## Brief Description of the Invention:

In high performance motor drive applications, instantaneous detection of rotor position is often a necessity. Rotor position may be detected by using a position sensor of some kind. Alternatively, sensorless position methods exist which are limited at the low speed range and have lower accuracy. It is very desirable to improve the accuracy of such systems simply using an inexpensive sensor which can be externally employed or can be implemented using the motor current or voltage which is already measured in most drives.

Furthermore, it is envisaged that in future motor and motor drive may be treated as a component and the drive may be manufactured to fit on the motor frame. Also in some applications, speed control needs to be implemented without modification of the existing mechanical arrangement. Therefore, a position sensing system which does not require any modification on the motor and the mechanical arrangement, yet gives accurate position information is very valuable. The invention here provides a solution to these requirements.

The invention here is; a method and system facilitating rotor speed and position detection, by means of detecting rotor slot harmonics or higher order rotor slot harmonics and processing this information in real time to achieve the purpose.

The current, voltage or air-gap flux of nearly all electrical machines contains harmonics caused by rotor slots. Filtering out the harmonics of the fundamental excitation harmonics and extracting the rotor slot harmonics, the rotor speed and position can be estimated, provided that the number of rotor slots is known. The present invention differs from others, as it does not need any spectral analysis techniques or complex calculations in implementation. The computation required in the present invention can be implemented so that the whole speed or position detection process can be executed within the control cycle of a vector controlled drive.

## Definition of the Figures:

The features of the invention believed to be novel are set forth in the appended claims. Further object, features and advantages of position and speed estimation with the method here, especially using higher order rotor slot harmonics will be better understood from the following description, relative to an example of a preferred and explanatory, non limiting schematic drawings, which:

FIG.1     is a flowchart showing the overall method for determining the rotor position in accordance with an embodiment of the invention.

FIG.2     is the spectrum data of the measured variable showing the higher rotor slot harmonics during demodulation and filtering processes.

FIG. 3     is a block diagram showing demodulation process, filtering and the obtained discrete signal.

FIG.4     is a spectrum data of the measured variable showing line harmonics, fundamental rotor slot harmonics and higher order rotor slot harmonics.

FIG. 5     is the spectrum data of the measured variable of processed data and experimental results during the proposed estimation method

FIG. 6    is representation of demodulated and filtered discrete signal used for position estimation.

FIG.7-8    are the experimental results obtained using the proposed rotor position estimation algorithm.

**Definition of the Elements (Features/Components/Parts) on the Figures:**

The definition of the features/components/parts which are covered in the figures, that are prepared in order to explain the present invention better, are separately numbered and given below.

1. Sampling process: Digitalization of the analogue measurements from the electrical machine (current, voltage, air gap flux, fringing flux etc.) using an analogue to digital converter with a sampling frequency.

2. Data demodulation: Multiplication of the sampled data with a virtually generated sinusoidal signal with fundamental frequency 3.

3. Fundamental frequency: Frequency equal to machine fundamental excitation voltage or current frequency.

4. Filtering: Filtering process of frequencies that are irrelevant to desired rotor slot harmonics.

5. Center frequency: Center frequency of the band-pass filter used in filtering process 4.

6. Position Counter: Algorithm that counts the filtered data to estimate position and speed of the rotor.

7. Identify Machine Speed & Position: Algorithm that outputs the speed and position information using the position counter 6. It requires number of rotor slots and number of poles as input.

8. Calculate Center Frequency: Algorithm that calculates the necessary center frequency 5 for filtering process 4 by using current speed and position data.

9. Non-available desired rotor slot harmonic: Non-available frequency component in the sampled data which becomes available after demodulation 2 process.

10. Side band harmonics: Lower and higher side band harmonics of the rotor slot harmonics available, before demodulation 2 process.

11. Spectral analysis visualization graph before demodulation 2 process; amplitude versus frequency

12. Desired rotor slot harmonic: Frequency component in the sampled data that becomes available after demodulation 2 process.

13. Modified side band harmonics: Lower and higher side band harmonics of the demodulated data, which deviate $\pm 2f_s$ from desired slot harmonic, after demodulation 2 process.

14. Spectral analysis visualization graph after demodulation 2 process; amplitude versus frequency

15. Isolated rotor slot harmonic: desired and isolated frequency component in the demodulated data after filtering 4 process.

16. Spectral analysis visualization graph of filtering 4 process: amplitude versus frequency

17. Sampling frequency: frequency component used in sampling 1 process.

18. Electrical measurement: Real time machine electrical measurements such as voltage, current, air-gap flux, fringing flux etc.

19. ADC: Analogue to digital conversion process using the electrical measurements 18 and sampling frequency 17.

20. Sample[n]: Digitized form of sampled data waveform.

21. Demodulation: Demodulation process as described in data demodulation 2.

22. Sin (fs[n]): Digitized form of fundamental excitation frequency waveform as described in 3.

23. Demodulated Signal: Digital signal after the demodulation process 21.

24. Band-pass filter: Digital band-pass filter algorithm to eliminate irrelevant line harmonics and side-band 10 components as described in filtering process 4.

25. Filtered Signal: Digital form of the signal after eliminating the side-band harmonic components 10.

26. Digital visualization of the filtered signal: The visualization of the signal after the filtering process 4 that will be used for rotor speed and position estimation.

27. Fundamental rotor slot harmonics: Dominant rotor slot harmonics that are used in most of the previous studies and patents.

28. Rotor slot harmonics k=2: Higher order rotor slot harmonics with harmonic order of two.

29. Rotor slot harmonics k=3: Higher order rotor slot harmonics with harmonic order of three.

30. Lower side band component: Lower side band component of the rotor slot harmonic before demodulation 2 process.

31. Higher side band component: Higher side band component of the rotor slot harmonic before demodulation 2 process.

32. Spectral analysis visualization graph of sampled data 1 before demodulation 2 process; amplitude versus frequency.

33. Lower side band component: Lower side band component of the rotor slot harmonic after demodulation 2 process.

34. Central component: Central component of the rotor slot harmonic after demodulation 2 process that is used for rotor speed and position estimation.

35. Higher side band component: Higher side band component of the rotor slot harmonic after demodulation 2 process.

36. Spectral analysis visualization graph of sampled data 1 after demodulation 2 process; amplitude versus frequency.

37. Filtered central components: Central component of the rotor slot harmonic after filtering process 4 that is used for rotor speed and position estimation.

38. Spectral analysis visualization graph of sampled data 1 after filtering process 4: amplitude versus frequency.

39. Displacement $\Delta\theta$: Visualization of the signal variation of the demodulated & filtered data over a single rotor slot displacement of rotor.

40. Displacement in a single sampling data $\Delta\theta_s$: The displacement in a single sampled data during the motion of rotor.

41. Experimental results of sampled data 1 after filtering process 4; amplitude versus time.

42. Experimental results and comparison of measured and estimated rotor position; degree versus time.

43. Zero crossing points of the demodulated and filtered signal 41.

44. Actual rotor position without interpolation; graph of the actual rotor position measured using an incremental encoder.

45. Estimated rotor position without interpolation; graph of the rotor position estimated by the aforesaid algorithm and method.

46. Experimental results of sampled data 1 after filtering process 4; amplitude versus time, for 47

47. Experimental result and comparison of measured and estimated rotor position for improved interpolation algorithm; degree versus time.

48. Actual rotor position with interpolation; graph of the actual rotor position measured using a coupled incremental encoder.

49. Estimated rotor position with interpolation: graph of the rotor position estimated by the aforesaid improved interpolation algorithm.

**Detailed Description Of The Invention:**

Magnetic structure of electrical machines (rotor and stator slotting) cause various harmonics in the air gap flux, phase current and phase voltage. These harmonics are combined in a generalized formula by Nandi S, et al.

In this embodiment of the invention rotor slot harmonics or its higher order harmonics may be utilized.

The frequency of higher order rotor slot harmonics ($F_{RSH}$) can be expressed as given in the following equations:

$$f_{RSH} = k.(Z/p)xf_r \pm f_s \qquad (1)$$

or

$$f_{RSH} = k \times f_R \pm f_s \qquad (2)$$

where:

k represents an integer related with the order of rotor slot harmonic

Z represents the number of rotor slots

p represents the number of pole pairs in the electrical machine

$f_r$ represents the mechanical frequency of rotor (Hz)

$f_s$ represents the applied stator frequency (Hz)

$f_R$ represents the rotor slot permeance variation frequency (number of rotor slots per pole multiplied with mechanical frequency of rotor)

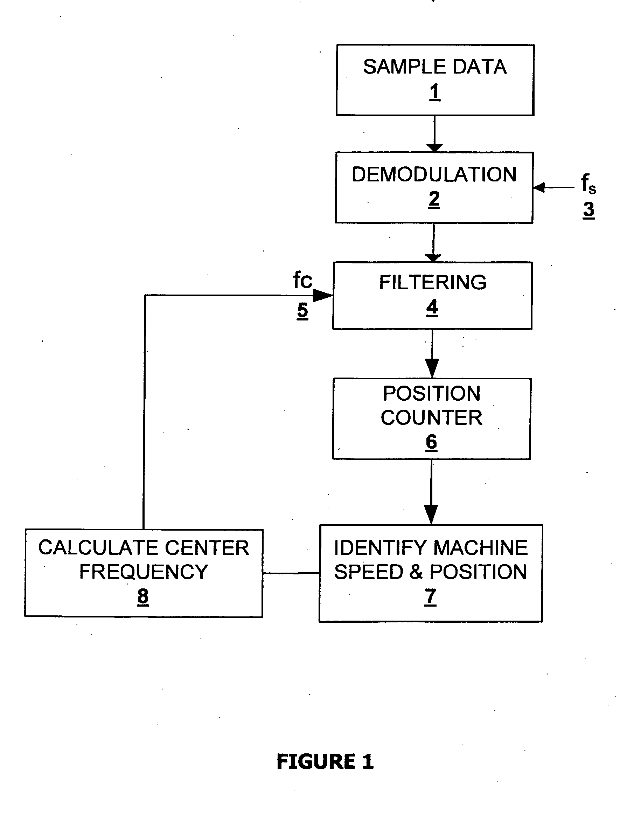

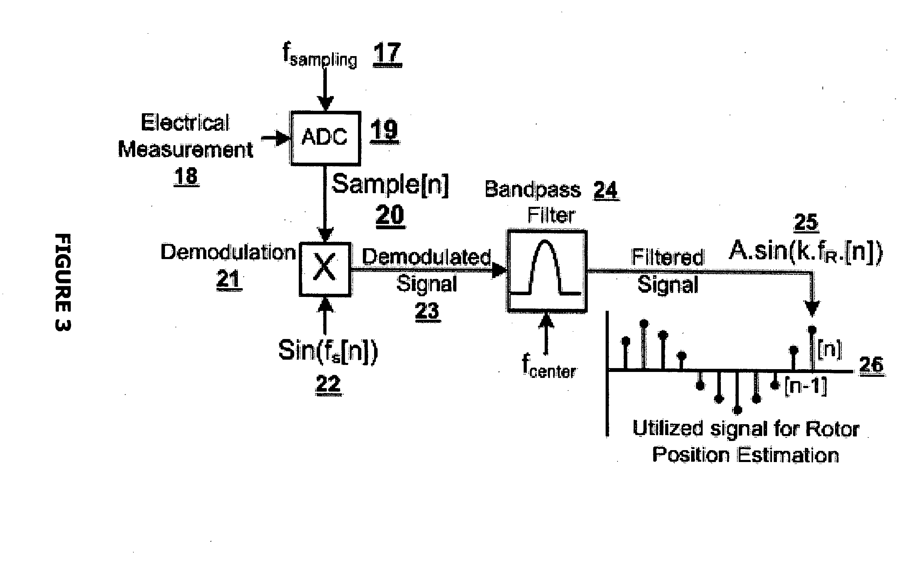

In one embodiment of the present invention, as illustrated in Fig. 1, the speed and position estimation algorithms start by sampling 1 of the data. The sampled data may be induced voltage from an external search coil, the phase voltage measurement for a current controlled machine or phase current measurement for a voltage controlled machine. One advantage of the present invention is the sampling 1 process does not need a sequential data set taken in a sampling period and storage medium as illustrated in Fig 3. As the data sampling continues, each captured data is demodulated 2 via multiplication with a sinusoidal signal at the applied fundamental voltage or current frequency 3. Note that in this process no information from electrical machine parameters is needed. In the demodulation process only an artificially generated sinusoidal signal with unit magnitude is used 22. This arbitrary signal may be easily generated since; applied excitation frequency is readily available in most drive applications.

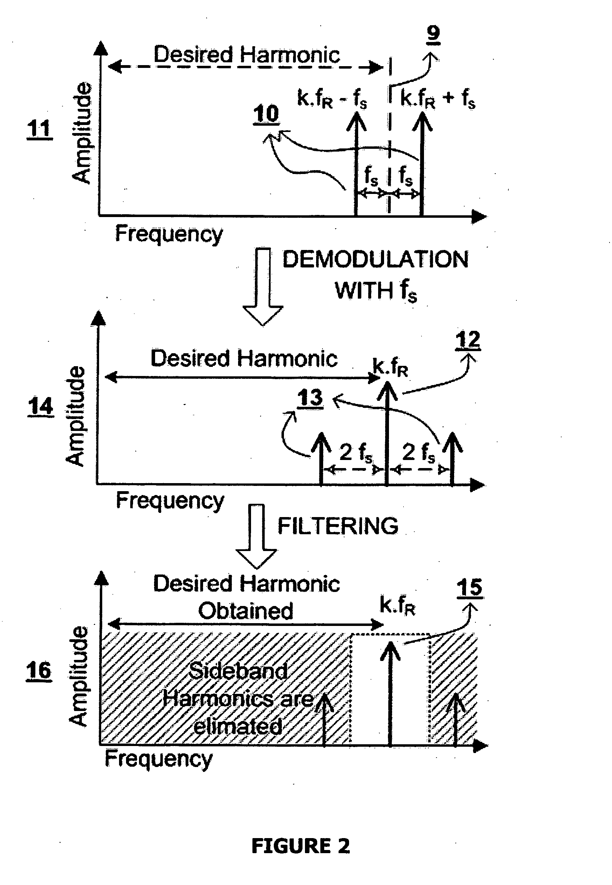

Then, the demodulated signal is filtered 4 with a band-pass filter. This operation needs a reference signal $f_c$ 5. The process, until 4 in the flow chart of Fig. 1, is explained once again in detail in Fig. 2, where identification of the signal at frequency $f_c$ ($kF_R$) is also explained.

The frequency of demodulated and filtered signal is directly related with RSH frequency. Instead of determining the signal at frequency RSH explicitly, a signal at higher order rotor slot harmonic frequency can be isolated from the other signals and used in the process. Due to the very high frequency of higher order harmonics utilizing these in the process may be more advantageous. Each cycle of the extracted signal corresponds to one slot pitch of the rotor. The position-counter 6 block of the algorithm is responsible for identifying the of rotor harmonic cycles. In this manner the number of cycles (hence the distance travelled) in a known time interval can be found and position of the rotor and the speed of the rotor can be accurately estimated 7.

Also, from the estimated rotor speed the center frequency of the filter for next estimation cycle is calculated in block 8 of the speed estimation algorithm. The algorithm continues by sampling new data.

Although, no spectrum analysis is necessary in the present invention, for ease of illustration in Fig. 2, the spectrum analysis of the sampled data during the demodulation 2 and filtering 4 processes are shown. As given in equation 2 and presented also in Fig .2 lower and higher side band harmonics 10 exist in sampled data. These two side band harmonics 10 exist apart from each other with twice the frequency of applied fundamental excitation. This helps identification of harmonics due to due to rotor slotting.

Demodulation process 14 is simply the multiplication of each sampled data with a unit magnitude sinusoidal signal with applied voltage frequency. In one embodiment of the present invention, the process can be applied as given in Fig. 3. For sampling of the data a computer medium or any analog to digital converter (ADC) 19 with a sampling frequency of ($t_{samp}$) 17. Demodulation 21 is a real-time process which is performed continuously as the each data is being sampled. In the demodulated signal of higher order rotor slot harmonics 14 there are three components; higher and lower side band harmonics 13. These are placed with a frequency difference of twice the supply frequency, from rotor frequency $kf_R$ 12. Obtaining the center component ($kf_R$) 15 is vital for the present invention. Therefore, the sideband harmonics should be eliminated by means of some filtering 16 and the center component ($kf_R$) 15 must be extracted. In one embodiment of the invention, a digital band-pass filter 24 is used which eliminates all harmonics but the center component ($kf_R$). The output of the filter 26 is a digital signal with frequency of $kf_R$.

Each cycle of the filtered signal 26 correspond to small change in rotor position. This displacement angle ($\Delta\theta$) is equal to;

$$\Delta\theta = \frac{2.\pi}{k.Z} \qquad (3)$$

In one embodiment of the present invention, the period of the signal can be detected by measuring the zero crossings of the signal. In that embodiment, the rotor position $\theta_r$) can be calculated as a sum of displacement angles. Thus, rotor position ($\theta_r$) becomes;

$$\theta_r = \frac{2.\pi.n}{k.Z} \qquad (4)$$

Where, n represents the number of zero crossings.

In another embodiment of the present invention, the accuracy of the rotor position estimation can be improved by some means of interpolation. In other words, instead of updating position data at each cycle, it can be updated by smaller steps at each sampled data. Also, instead of zero crossing detection of the filtered data 26, peak detection or any other method may be used as needed.

The method has been tested on several induction machines. In one of these tests, the fringing flux is measured with an external sensing coil while the induction machine is running on a voltage controlled inverter at 40 Hz. The machine has two poles with a number of 18 rotor slots and rotating at 2225 rpm (in other words; $f_r$ = 37.08 Hz) as the measurements are captured.

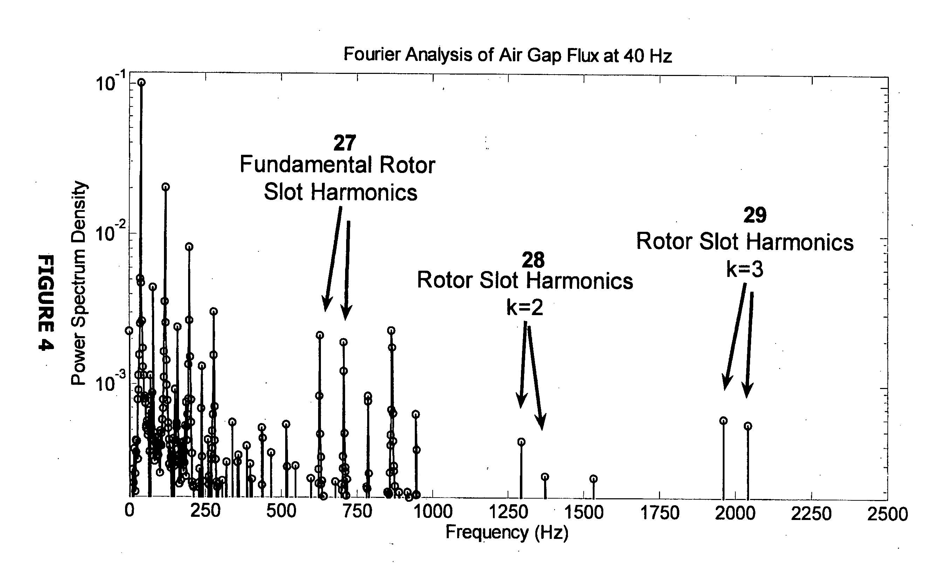

Fig 4. is an example of this embodiment of the invention. In the spectral analysis, the fundamental rotor slot harmonics 27, and second 28 and third 29 order rotor slot harmonics are shown. Higher order rotor slot harmonics 28, 29 are the harmonics that are preferred to be used in the invention.

Using equation 1, the third order (k=3) rotor slot harmonics 29 can be verified to occur at 1962 Hz and 2042 Hz. Note that, fundamental rotor slot harmonics are mixed with many line harmonics, which is the main reason for preferring the use of higher order rotor slot harmonics.

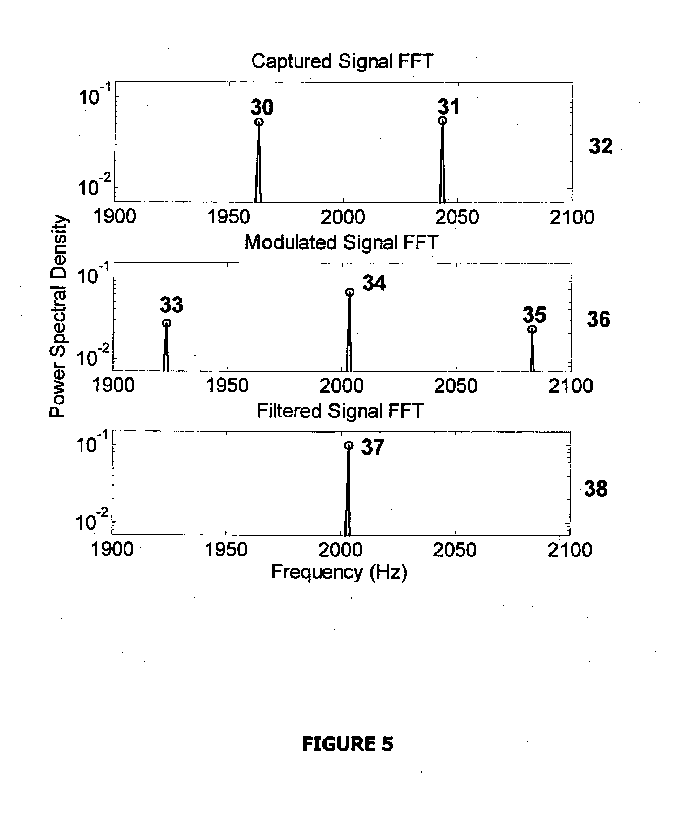

In Fig.5, the detailed view of the spectral analysis of the data presented in Fig. 4, during position estimation steps is given. In demodulation step 36, the multiplication of the sampled data with a signal with frequency of applied voltage (40 Hz) output three components; lower side-band component at 1922 Hz 33, center component at 2002 Hz 34 and higher side-band component at 2082 Hz 35. The center frequency component frequency is directly related with rotor slot permeance variation frequency ($f_R$), since in this embodiment the rotor slot harmonic order three (k=3) is used; it can be concluded from equation 2 that, 2082 Hz 35 is equals to $k.f_R$. Also note the frequency difference between side band harmonics 33, 35 doubles as a result of the demodulation process.

The filtering process 38 aims to extract only the central component 37, thus real-time position estimation can be performed.

Once the central higher order rotor slot harmonic component is extracted, the rotor position can be estimated in many simple ways.

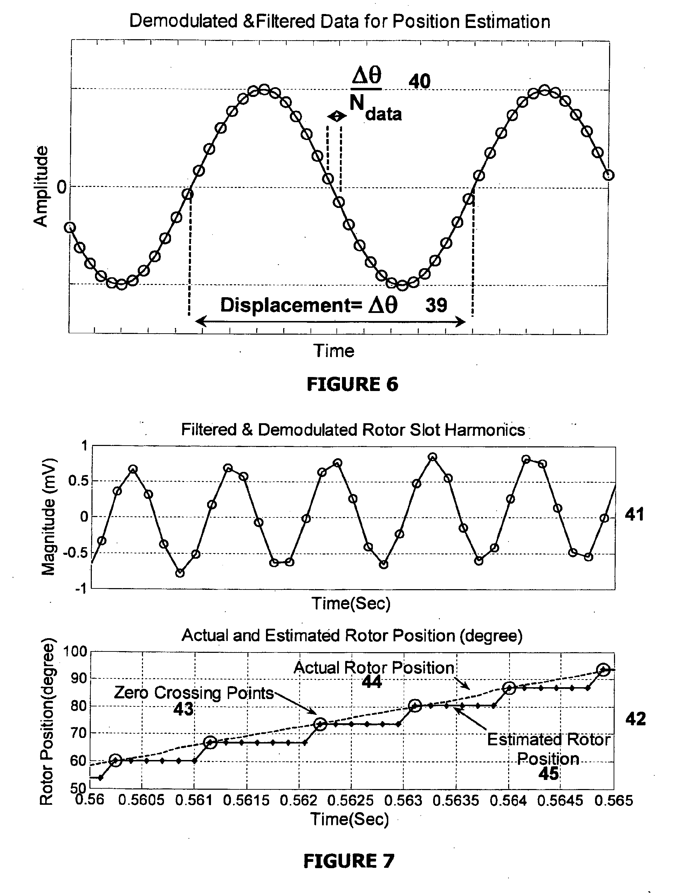

In Fig.6, the demodulated and filtered data for one embodiment of the present invention is given. This final data is a discrete signal with a sampling frequency of $f_{samp}$. As given in equation (3), one full cycle of the signal 39 corresponds to a small displacement angle ($\Delta\theta$). The full displacement can be detected either by zero-crossing detection, peak detection or any other methods that is not listed. Once, the full cycle of the signal is detected, rotor position should be updated as follows 7;

$$\theta = \theta' + \Delta\theta \qquad (5)$$

In Eq. 5, $\theta$ is the updated rotor position and $\theta'$ is the previous rotor position.

Rotor speed may be easily calculated by measuring the elapsed time period for a certain rotor displacement. Then the center frequency for the filter is updated if there is any change in the rotor speed for next estimation cycle 8.

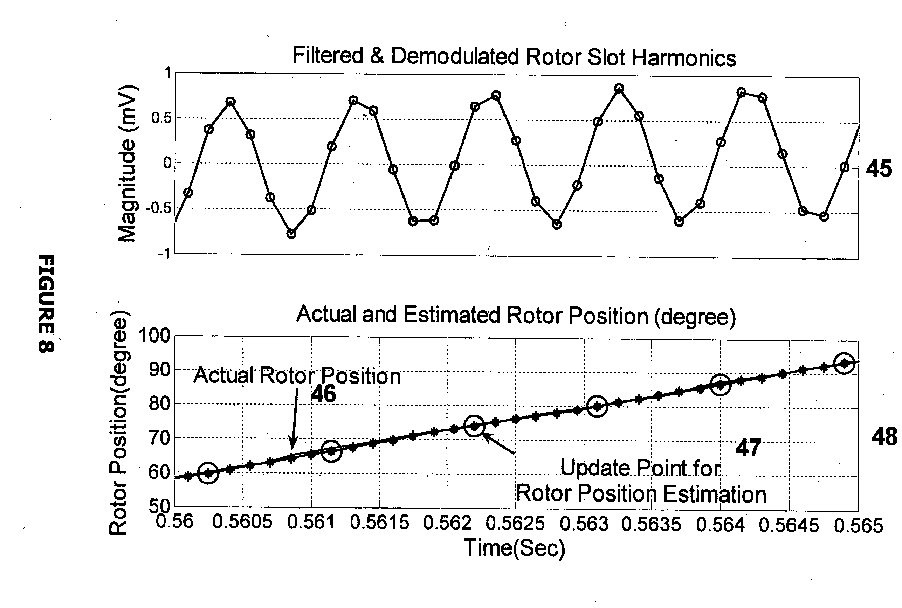

In Fig.7 the demodulated and filtered higher order rotor slot harmonics obtained from air gap flux measurement is given 41 while the machine is driven with an inverter at 20Hz. Also, the estimated rotor position 45 which is updated on zero crossings 43 of the rotor slot harmonics is given. The estimated rotor position is compared in Fig. 7 with the actual rotor position 44 which is measured with an accurate incremental encoder coupled to machine shaft. The results show that the algorithm predicts the rotor position very accurately. However, numerous improvements are possible for rotor position algorithm using some interpolation techniques. In Fig.8, the same data is evaluated using on of the interpolation technique. The rotor position is updated on each zero crossing 47 as previously mentioned; but instead of assuming rotor position constant between each zero crossing instants it is updated at each cycle using a simple interpolation technique. As it can be seen, the estimated rotor position matches very well with the actual rotor position 48.

The described embodiments of the present invention have many advantages,. The technique envisaged above is very efficient in computational manner because the present invention does not need any spectral analysis. The rotor position can be estimated by simple multiplication, filtering and counting blocks. Therefore, the estimation can be easily performed within a typical control cycle of a vector controlled drive. Hence the dynamic performance of so called sensorless vector control techniques can be greatly improved.

Specific options have been described above for carrying out the more generic embodiments of the present invention. It is contemplated, and will be apparent to those skilled in the art from the foregoing specification, drawings, and example that modifications and/or changes may be made in the embodiments of the invention. Accordingly, it is expressly intended that the foregoing description and example are illustrative of one embodiment only, not limiting its possible implementations, and that the scope of the present invention be determined by reference to the appended claims.

## Claims

1. A method employing sampling and filtering data, **characterized by** the steps of:

   (a) Sampling data that includes rotor slot harmonics or higher order rotor slot harmonics;
   (b) Demodulation of the sampled data;
   (c) Filtering the data to eliminate side band rotor slot harmonics;
   (d) Applying a counting algorithm to count the number of cycles of rotor slot harmonics within a time interval in the extracted signal; and

(e) Updating rotor position, rotor speed and filter characteristics for the next cycle.

2. The method of claim 1 wherein sampled data is obtained from

  (a) Phase voltage;
  (b) Phase current; or
  (c) Induced voltage from a sensing coil that measures air gap flux or fringing leakage flux.

3. The method of claim 1 wherein higher order rotor slot harmonics comprises the fundamental as well as the second, third or higher (k=2, 3 ...) frequency multiples of rotor slot harmonics.

4. The method of claim 1 wherein the demodulation process comprises the multiplication of the sampled data with an artificially generated sinusoidal signal and the sinusoidal signal is a sinusoidal signal with following properties;

  (a) With some magnitude; and
  (b) Frequency equals to the applied fundamental excitation frequency of the machine.

5. The method of claim 4, comprising the output of three components;

  (a) Central component with frequency $k.f_R$;
  (b) The lower sideband which has a frequency smaller than twice the fundamental excitation frequency than the central frequency component ($k.f_R - 2.fs$);
  (c) The higher sideband which has a frequency larger than twice the fundamental excitation frequency than the central frequency component ($k.f_R + 2.fs$) and $f_R$ represents the rotor slot permeance variation frequency which corresponds to the number of rotor slots per pole multiplied with mechanical frequency of the rotor in Hz.

6. The method of claim 1 wherein the filtering process comprises the elimination of sideband harmonics and other irrelevant harmonics except the central component of Claim 5.

7. The method of claim 1 wherein the counting algorithm comprises counting the number of full cycles of the filtered signal by detecting

  (a) Zero crossings of the signal;
  (b) Peaks of the signal;
  (c) Or any other property of the signal.

8. The method of claim 1 wherein updating the rotor position comprises increasing the previous rotor position by adding the displacement angle detected, and wherein the displacement angle comprises a change in the rotor position which equals in radians to $2.\pi$ divided by order of harmonics (k) and the number of rotor slots (Z).

9. The method of claim 1 wherein updating the rotor position comprises determining the elapse of the time period for a certain amount of rotor displacement and dividing the displacement angle by elapsed time.

10. The method of claim 1 wherein updating rotor filter characteristic comprises two properties of a band pass filter;

  (a) Centre frequency; and
  (b) Bandwidth.

11. The method of claim 10 wherein the center frequency property of the band pass filter comprises the present higher order rotor slot harmonic which is found by multiplication of rotor speed in Hertz($f_r$) with higher order rotor slot harmonic order (k) and number of rotor slots per pole pair (Z/p).

12. The method of claim 10 wherein the band with property of the band pass filter comprises update of the filter bandwidth according to the applied frequency.

13. The method of claim 10 wherein updating the filter characteristics comprises updating within each algorithm cycle or updating in more cycles, if the rotor mechanical time constant is longer compared to the update frequency.

14. The method of claim 13 wherein updating the filter characteristics comprises redefining the filter constants, within a computer medium or analog circuitry.

15. The method of claim 13 wherein updating the filter characteristics comprises a stand alone varying center frequency band-pass filter circuitry.

**Patentansprüche**

1. Ein Verfahren, bei dem Abtasten und Filtern der Daten angewendet wird, **gekennzeichnet durch** die Schritte:

  (a) Abtasten der Daten, das Rotorschlitzharmonischen oder Rotorschlitzharmonischen höherer Ordnung enthält;
  (b) Demodulation der abgetasteten Daten;
  (c) Filtern der Daten, um die Seitenbandrotorschlitzharmonischen zu beseitigen;
  (d) Anlegen eines Algorithmus zum Zählen der Anzahl von Zyklen von Rotorschlitzharmonischen innerhalb eines Zeitintervalls in dem extrahierten Signal; und

(e) Aktualisieren der Rotorposition, der Rotorgeschwindigkeit und der Filtereigenschaften für den nächsten Zyklus.

2. Verfahren nach Anspruch 1, wobei die abgetasteten Daten aus

(a) Phasenspannung;
(b) Phasenstrom; oder
(c) Induzierte Spannung aus einer Sensorspule, die Luftspaltfluss oder Streufluss misst; erhalten werden.

3. Verfahren nach Anspruch 1, wobei Rotorschlitzharmonischen höherer Ordnung ein Vielfaches der grundlegenden als auch der zweiten, dritten oder höheren (k = 2, 3 ...) Frequenz der Rotorschlitzharmonischen umfassen.

4. Verfahren nach Anspruch 1, wobei das Demodulationsverfahren umfasst: die Multiplikation der abgetasteten Daten mit einem künstlich erzeugten Sinussignal und dem sinusförmigen Signal ist ein sinusförmiges Signal mit folgenden Eigenschaften:

(a) Mit gewissem Ausmass, und
(b) Frequenz gleich der angelegten Anregungsgrundfrequenz der Maschine.

5. Verfahren nach Anspruch 4, umfassend den Ausgang der drei Komponenten;

(a) Zentraler Bestandteil mit der Frequenz $k.f_R$;
(b) Das untere Seitenband, welches eine Frequenz kleiner als das Doppelte der Anregungsgrundfrequenz als die Mittenfrequenzkomponente ($k.f_R$ - 2.fs) hat;
(c) Die höhere Seitenband, welche eine Frequenz größer als das Doppelte der Anregungsgrundfrequenz als die Mittenfrequenzkomponente ($k.f_R$ + 2.fs) hat und $f_R$ den Rotorschlitz-Permeanz-Schwankungsfrequenz darstellt, welche der Anzahl von Rotorschlitzen pro Pol multipliziert mit mechanischer Frequenz des Rotors in Hertz entspricht.

6. Verfahren nach Anspruch 1, wobei der Filtervorgang die Eliminierung von Seitenband-Harmonischen und anderen irrelevanten Harmonischen außer der zentralen Komponente nach Anspruch 5 umfasst.

7. Verfahren nach Anspruch 1, wobei das Zählalgorithmus Zählen der Anzahl von vollen Zyklen des gefilterten Signals durch Detektieren

(a) Nulldurchgänge des Signals;

(b) Peaks des Signals;
(c) Oder jede andere Eigenschaft des Signals;

umfasst.

8. Verfahren nach Anspruch 1, wobei die Aktualisierung der Rotorposition umfasst, die Erhöhung der früheren Rotorposition durch Addieren des erfassten Verschiebungswinkel, und wobei der Verschiebungswinkel eine Änderung in der Rotorposition umfasst, die in Radiant zu $2.\pi$ geteilt durch Ordnung der Harmonischen (k) und der Anzahl von Rotorschlitzen (Z) gleich ist.

9. Verfahren nach Anspruch 1, wobei die Aktualisierung der Rotorposition das Bestimmen der Ablauf der Zeitdauer für eine bestimmte Menge der Rotorverschiebung und Dividieren des Versatzwinkels von der verstrichenen Zeit umfasst.

10. Verfahren nach Anspruch 1, wobei die Aktualisierung der Rotorfiltercharakteristik zwei Eigenschaften eines Bandpassfilters aufweist;

(a) Mittenfrequenz; und
(b) Bandbreite.

11. Verfahren nach Anspruch 10, wobei die Mittenfrequenzeigenschaft des Bandpassfilters die vorliegenden Rotorschlitzharmonischen höherer Ordnung umfasst, die durch Multiplikation der Rotorgeschwindigkeit in Hertz ($f_r$) mit Rotorschlitzharmonischen höherer Ordnung Ordnung (k) und die Anzahl der Rotorschlitzen pro Pol-Paar (Z/p) gefunden wird.

12. Verfahren nach Anspruch 10, wobei das Band mit der Eigenschaft des Bandpassfilters Aktualisierung der Filterbandbreite entsprechend der angelegten Frequenz umfasst.

13. Verfahren nach Anspruch 10, wobei die Aktualisierung der Filtereigenschaften die Aktualisierung des Algorithmus in jedem Zyklus oder in mehreren Zyklen umfasst, wenn der mechanische Rotor-Zeitkonstante verglichen mit der Aktualisierungsfrequenz länger ist.

14. Verfahren nach Anspruch 13, wobei die Aktualisierung der Filtereigenschaften die Neudefinition der Filterkonstanten in einem Computermedium oder analogen Schaltungen umfasst.

15. Verfahren nach Anspruch 13, wobei die Aktualisierung der Filtereigenschaften eine eigenständige variierende Mittenfrequenz-Bandpassfilterschaltung umfasst.

**Revendications**

1. Un procédé utilisant des données d'échantillonnage et de filtrage , **caractérisé par** les étapes consistant à:

(a) Les données d'échantillonnage qui comprend des harmoniques à sous de rotor ou d'ordre supérieur harmoniques à sous du rotor;
(b) La démodulation des données échantillonnées;
(c) Filtrer les données pour éliminer secondaires bande rotor harmoniques à sous;
(d) L'application d'un algorithme de comptage pour compter le nombre de cycles d'harmoniques de fente de rotor à l'intérieur d'un intervalle de temps dans le signal extrait, et
(e) Mise à jour de la position du rotor, la vitesse du rotor et des caractéristiques de filtre pour le cycle suivant.

2. Procédé selon la revendication 1, dans lequel les données échantillonné est obtenu à partir

(a) Tension de phase;
(b) Courant phase; ou
(c) Tension induite à partir d'une bobine de détection qui mesure le flux d'entrefer ou fuite frangeant flux.

3. Procédé selon la revendication 1, dans lequel les harmoniques d'ordre supérieur de fente de rotor comprend la fondamentale ainsi que la seconde, troisième ou plus (k = 2, 3 ...) des multiples de la fréquence des harmoniques de fente de rotor.

4. Procédé selon la revendication 1, dans lequel le processus de démodulation comprend la multiplication des données échantillonnées avec un signal sinusoïdal généré artificiellement, et le signal sinusoïdal est un signal sinusoïdal dont les propriétés suivantes;

(a) Avec une certaine ampleur; et
(b) La fréquence est égale à la fréquence d'excitation fondamentale appliquée de la machine.

5. Procédé selon la revendication 4, comprenant la sortie de trois composants;

(a) Élément central de la fréquence $k.f_R$;
(b) La bande latérale inférieure qui a une fréquence inférieure au double de la fréquence d'excitation fondamentale de la composante de fréquence centrale $(k.f_R - 2.fs)$
(c) La bande latérale supérieure qui a une fréquence supérieure à deux fois la fréquence d'excitation fondamentale de la composante de fréquence centrale $(k.f_R + 2.fs)$ et $f_R$ représente la fente de rotor perméance à la fréquence de variation qui correspond au nombre de fentes par pôle du rotor multiplié par la fréquence mécanique du rotor exprimée en Hz.

6. Procédé selon la revendication 1, dans lequel le processus de filtrage comprend la suppression des harmoniques de bandes latérales et les autres harmoniques non pertinents à l'exception du composant central de la revendication 5 .

7. Procédé selon la revendication 1, dans lequel l'algorithme de comptage comprend le comptage du nombre de cycles complets du signal filtré en détectant

(a) Des passages par zéro du signal;
(b) Crêtes du signal;
(c) Ou toute autre propriété du signal.

8. Procédé selon la revendication 1, dans lequel la mise à jour de la position du rotor comprend l'augmentation de la position du rotor précédente en ajoutant l'angle de déplacement détecté, et dans lequel l'angle de déplacement comprend une modification de la position du rotor qui est égale en radians à $2.\pi$ divisée par ordre d'harmoniques (k) et le nombre d'encoches du rotor (Z).

9. Procédé selon la revendication 1, dans lequel la mise à jour de la position de rotor comprend la détermination de l'écoulement de la période de temps d'une certaine quantité de déplacement du rotor et divisant l'angle de déplacement par le temps écoulé.

10. Procédé selon la revendication 1, dans lequel la mise à jour rotor caractéristique de filtre est composé de deux propriétés d'un filtre passe-bande;

(a) Fréquence centrale; et
(b) La bande passante.

11. Procédé selon la revendication 10, dans lequel la propriété de la fréquence centrale du filtre passe-bande comprend la présente d'ordre supérieur rotor fente harmonique que l'on trouve par multiplication de la vitesse du rotor en Hertz $(f_r)$ d'un ordre supérieur fente de rotor harmonique d'ordre (k) et le nombre de rotor fentes par paire de pôles (Z/p).

12. Procédé selon la revendication 10, dans lequel la bande avec la propriété du filtre passe-bande comprend la mise à jour de la largeur de bande du filtre en fonction de la fréquence appliquée.

13. Procédé selon la revendication 10, dans lequel la mise à jour des caractéristiques de filtre comprend la mise à jour dans chaque cycle de l'algorithme de mise à jour ou en plusieurs cycles, si la constante de temps mécanique du rotor est plus long par rapport à la fréquence de mise à jour.

14. Procédé selon la revendication 13, dans lequel la mise à jour des caractéristiques de filtre comprend la redéfinition des constantes de filtre, à l'intérieur d'un support informatique ou d'un analogue de circuits.

15. Procédé selon la revendication 13, dans lequel la mise à jour des caractéristiques de filtre comprend un stand alone faire varier la fréquence centrale passe-bande de circuits de filtre.

SAMPLE DATA
**1**

DEMODULATION
**2**
← $f_s$
**3**

$fc$
**5**
FILTERING
**4**

POSITION
COUNTER
**6**

CALCULATE CENTER
FREQUENCY
**8**

IDENTIFY MACHINE
SPEED & POSITION
**7**

**FIGURE 1**

**FIGURE 2**

**FIGURE 3**

FIGURE 4

**FIGURE 5**

Demodulated &Filtered Data for Position Estimation

**FIGURE 6**

**FIGURE 7**

FIGURE 8

Filtered & Demodulated Rotor Slot Harmonics

Actual and Estimated Rotor Position (degree)

Actual Rotor Position

46

Update Point for
Rotor Position Estimation

47

45

48

EP 2 556 381 B1

## EP 2 556 381 B1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5565752 A
- US 5585709 A
- US 4761703 A, Kliman
- US 5519337 A, Casada
- US 5530343 A
- US 6208132 A

- US 6789028 B
- US 6388420 B, Jansen
- DE 102006008048, Takasi
- WO 9815839A1 A
- US 2003065634 A1
- JP 2007259559 A

**Non-patent literature cited in the description**

- External Search Coil as a Means of Measuring Rotor Speed of an Induction Motor. **ERTAN H. B. et al.** Electromotion 2009 - EPE. 01 July 2009
- **NEGREA M. D.** Electromagnetic flux monitoring for detecting faults in electrical machines. *Ph.D. thesis,* 2006
- **HURST K. D.** Sensorless Speed Measurement Using Current Harmonic Spectral Estimation in Induction Machine Drives. *IEEE Transactions on Power Electronics,* January 1996, vol. 11 (1

- **K.D. HURST.** A Comparison of Spectrum Estimation Techniques or Sensorless Speed Detection in Induction Machines. *IEE Trans. On Industry Applications,* 1997, vol. 33 (4), 898-905
- **NANDI S et al.** Detection of Rotor Slot and Other Eccentricity Related Harmonics in a Three Phase Induction Motor with Different Rotor Cages. *IEEE Energy Conversion,* 2001, vol. 16 (3), 253-260